# FASCICULE DE BREVET EUROPEEN

(11) **EP 3 347 260 B1**
(45) Date de publication et mention de la délivrance du brevet: **02.10.2019**
(21) Numéro de dépôt: 16756737.9
(22) Date de dépôt: 02.08.2016
(51) Int. Cl.: B62D 25/20, B62D 63/02

(54) **CAISSE DE VEHICULE AUTOMOBILE A EMPATTEMENT MODULABLE**
KRAFTFAHRZEUGKAROSSERIE MIT EINSTELLBAREM ACHSSTAND
MOTOR VEHICLE BODY SHELL WITH ADJUSTABLE WHEELBASE

(30) Priorité: 11.09.2015 FR 1558489
(43) Date de publication de la demande: 18.07.2018
(73) Titulaire: PSA AUTOMOBILES S.A., 78300 Poissy (FR)
(72) Inventeur: ALPY, Eric, 25460 Etupes (FR)
(74) Mandataire: Fernandez, Francis Lionel
(86) Numéro de dépôt international: PCT/FR2016/052014
(87) Numéro de publication internationale: WO 2017/042446

(56) Documents cités:
- DE-A1- 10 260 913
- DE-A1-102008 055 738
- DE-A1-102011 089 044
- FR-A1- 2 890 367

## Description

L'invention a trait au domaine des véhicules automobiles. Elle concerne, plus précisément, la conception de leur caisse.

Lors du montage d'un véhicule automobile, une caisse est assemblée par soudage d'un ensemble de tôles embouties, les composants moteur et les équipements étant ensuite rapportés sur la caisse. L'ensemble de tôles formant la caisse ne comprend pas les ouvrants du véhicule automobile.

Il est connu, dans l'état de la technique, qu'une caisse comprenne :
- un bloc avant, composé d'un plancher avant prolongé d'un plancher arrière, et un tunnel séparant de manière centrale le plancher avant du plancher arrière, ce tunnel s'étendant longitudinalement ;
- un bloc arrière, composé d'une planche à talon permettant la pose des pieds des passagers arrière d'un véhicule automobile.

Il est également connu qu'un modèle de véhicule automobile puisse se décliner en plusieurs variantes. Chez de nombreux constructeurs, par exemple, une version « berline » d'un véhicule automobile possède une longueur totale supérieure aux autres variantes. La variation de longueur d'un véhicule conduit les constructeurs à concevoir des architectures de caisse modulables, de sorte à fabriquer des blocs avants et des blocs arrières pouvant se fixer dans plusieurs positions, et ainsi obtenir plusieurs variantes de la caisse, une caisse courte et une caisse longue par exemple.

Le plancher précédemment décrit ne peut pas convenir à une architecture de caisse modulable, car il ne s'adapte pas aux différentes longueurs de la caisse d'un véhicule comprenant différentes variantes.

Pour remédier à cet inconvénient, il est connu, par exemple de DE 10 2008 055738, qu'une caisse comprenne un bloc avant pouvant se fixer à un bloc arrière dans plusieurs positions, de sorte que la caisse puisse avoir plusieurs versions, cette caisse comprenant une planche à talon en forme de L, fixée au bloc arrière et chevauchant une partie du plancher arrière. La planche à talon est une tôle pliée comprenant une section verticale et une section horizontale. Selon les versions d'un véhicule automobile, la section horizontale de la planche à talon a une longueur variable, de sorte à toujours recouvrir la planche arrière, sur une plage de recouvrement identique à toutes les versions.

La plage de recouvrement de la planche arrière est très importante : la planche à talon renforce la résistance de la caisse face à un choc latéral, en diminuant les déformations de la caisse.

Cette caisse permet de faire varier la longueur totale d'un véhicule, grâce à son architecture modulable et au recouvrement du plancher arrière par la planche à talon. Cependant, chaque version de la caisse nécessite une planche à talon adaptée à la bonne longueur, ainsi, plusieurs planches à talon sont nécessaires, la planche à talon étant formée d'une tôle unique.

Un objectif est de proposer une caisse de véhicule automobile comprenant une planche à talon modulable, apte à s'adapter à différentes versions de caisse possibles.

Un deuxième objectif est de proposer une caisse de véhicule automobile comprenant une planche à talon simple à fabriquer et assez robuste pour limiter au minimum les contraintes de déformation de la caisse face à un choc latéral.

A cet effet, il est proposé, en premier lieu, une caisse de véhicule automobile à empattement modulable, cette caisse comprenant:
- un bloc avant, comportant un plancher avant prolongé d'un plancher arrière ;
- un bloc arrière, solidaire du bloc avant et comportant une planche à talon, fixée sur un bord vertical du bloc arrière,
la caisse comprenant également deux extensions, distinctes de la planche à talon, montées sur le plancher arrière et un bord horizontal du bloc arrière, au contact de la planche à talon et comprenant chacune une bordure apte à recouvrir en partie la planche à talon.

Diverses caractéristiques supplémentaires peuvent être prévues, seules ou en combinaison :
- le bloc avant est séparé en deux par un tunnel s'étendant longitudinalement et de manière centrale, le long des planchers ;
- les extensions ont une nuance de matériau différente de la planche à talon ;
- les extensions ont une épaisseur différente de l'épaisseur de la planche à talon ;
- la largeur des extensions est variable selon l'empattement du véhicule automobile ;
- la planche à talon et les extensions sont réalisées par emboutissage ;
- le bloc avant comprend une pluralité de trous, creusés dans des parois ;
- le bloc arrière comprend une pluralité de perçages, creusés dans des excroissances ;
- le bloc avant est solidaire du bloc arrière, dans plusieurs positions ajustables, grâce à un moyen de fixation traversant les trous et les perçages.

Il est proposé, en second lieu, un véhicule automobile comprenant la caisse telle que précédemment décrite.

D'autres caractéristiques et avantages de l'invention apparaîtront plus clairement et de manière concrète à la lecture de la description ci-après de modes de réalisation, laquelle est faite en référence aux dessins annexés, dans lesquels :
- la figure 1 est une vue en perspective d'un véhicule automobile (en traits pointillés) comprenant une caisse (en traits gras continus) à empattement modulable,
- la figure 2 est une vue en perspective éclatée, vue de haut, de la caisse de la figure 1, cette figure comprenant deux médaillons de détails à échelle agrandie,
- la figure 3 est une vue en perspective de la caisse de la figure 1,
- la figure 4 est une vue en perspective de la caisse de la figure 1, selon un mode de réalisation,
- la figure 5 est une vue en perspective, en coupe, de la caisse de la figure 1, cette figure comprenant un médaillon de détails à échelle agrandie.

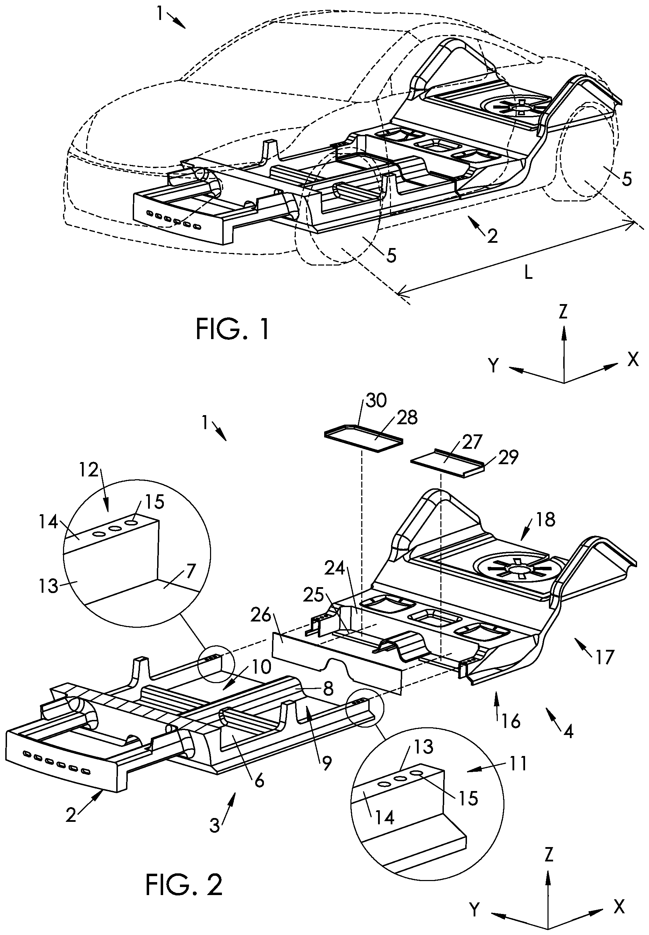

Sur la figure 1 est représenté un véhicule 1 automobile (en traits pointillés) comprenant une caisse 2 (en traits gras continus) à empattement L modulable.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Dans la suite de la description et en référence au repère défini ci-dessus, les termes « longitudinal » ou « longitudinalement » font référence à une direction confondue avec l'axe X, les termes « transversal » ou « transversalement » font référence à une direction confondue avec l'axe Y, et les termes « vertical » ou « verticalement » font référence à une direction confondue avec l'axe Z.

Tel qu'illustré sur la figure 2, la caisse 2 comprend un bloc 3 avant et un bloc 4 arrière, le bloc 3 avant est associé à un essieu avant, tandis que le bloc 4 arrière est associé à un essieu arrière, les deux essieux portant des roues 5 du véhicule 1 automobile et étant séparés de l'empattement L.

L'empattement L est variable, selon la version du véhicule 1 automobile : en effet, il existe plusieurs variantes du bloc 4 arrière ayant des longueurs différentes, toutes associées à une version spécifique du véhicule 1 automobile (par exemple "break", "berline").

Le bloc 3 avant est composé d'un ensemble de tôles, formant un plancher 6 avant, associé au passagers avant du véhicule 1 automobile, et un plancher 7 arrière, prolongeant le plancher 6 avant et étant associé aux passagers arrière du véhicule 1 automobile. Le bloc 3 avant comprend également un tunnel 8, s'étendant longitudinalement, et séparant de manière centrale les deux planchers 6, 7 en une section 9 gauche et une section 10 droite. Avantageusement, le tunnel 8 couvre la ligne d'échappement et le système de transmission du véhicule 1 automobile.

Les deux planchers 6, 7 sont délimités par deux parois, à savoir, une première paroi 11 délimitant la section 9 gauche, et une deuxième paroi 12 délimitant la section 10 droite. Les parois 11, 12 présentent, en section transversale, un profil rectangulaire comprenant une section 13 verticale et une section 14 horizontale percée d'une pluralité de trous 15. Avantageusement, la forme rectangulaire des parois 11, 12 permet le montage du bloc 4 arrière avec le bloc 3 avant, les trous 15 permettant quant à eux de solidariser le bloc 3 avant avec le bloc 4 arrière, dans plusieurs positions.

Le bloc 4 arrière comprend deux parties, à savoir, une partie 16 basse et une partie 17 haute. La partie 16 basse correspond à un espace dédiée aux sièges arrières du véhicule 1 automobile, tandis que la partie 17 haute correspond à un espace 18 inférieur à un coffre du véhicule 1 automobile, cet espace 18 servant à disposer une roue de secours.

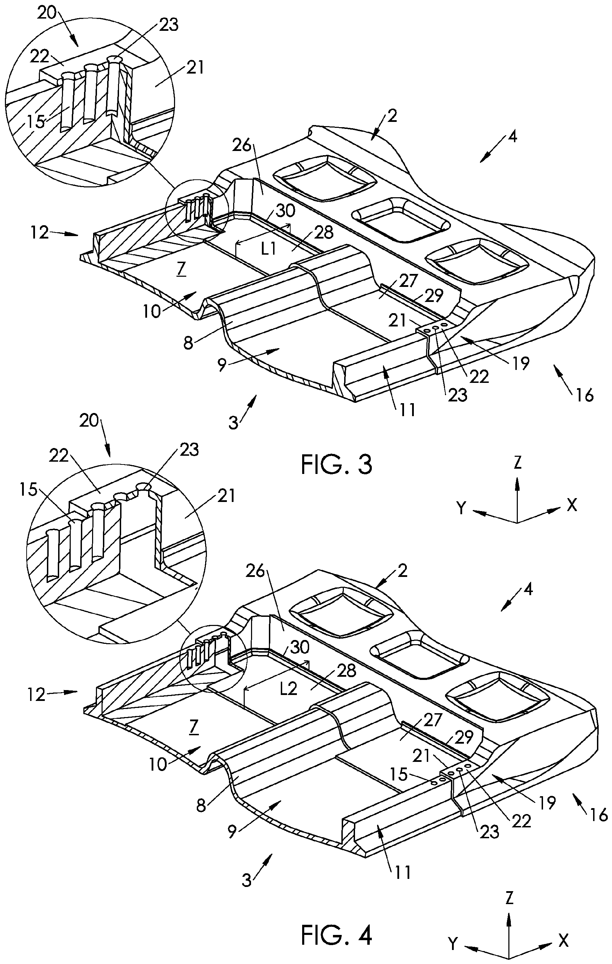

Tel qu'illustré sur la figure 3, la partie 16 basse comprend des excroissances 19, 20 présentant en section transversale un profil rectangulaire comprenant une section 21 primaire et une section 22 secondaire. Les sections 22 secondaire de chaque excroissance 19, 20 possèdent une pluralité de perçages 23 aptes à coïncider avec les trous 15, lorsque les excroissances 19, 20 sont superposées aux parois 11, 12, dans le but de solidariser le bloc 3 avant avec bloc 4 arrière.

Dans la version du véhicule 1 automobile représentée en figure 3, les trous 15 et les perçages 23 sont disposés de sorte à ce que l'empattement L du véhicule 1 automobile soit le plus court possible.

La partie 16 basse comprend un bord 24 vertical et un bord 25 horizontal, reliant entre elles les deux excroissances 19, 20.

La caisse 2 comprend une planche 26 à talon, formée d'une tôle montée sur le bord 25 horizontal, au contact du bord 24 vertical, et solidaire du bloc 4 arrière, de sorte à assurer un support pour les pieds des passagers arrière du véhicule 1 automobile.

La planche 26 à talon possède une longueur (transversale) égale à la longueur du bord 24 vertical et du bord 25 horizontal, de sorte à s'étendre sur la totalité de la largeur (transversale) des planchers 6, 7.

La caisse 2 comprend également deux extensions 27, 28, formées de tôles montées à la fois sur le plancher 7 arrière et le bord 25 horizontal, de part et d'autre du tunnel 8 et en contact avec la planche 26 à talon, tout en étant dissociée de celle-ci. Les extensions 27, 28 comprennent chacune une bordure 29, 30 s'étendant verticalement depuis la périphérie des extensions 27, 28, de sorte à recouvrir en partie la planche 26 à talon.

Les extensions 27, 28 possèdent une longueur L1, correspondante à la version du véhicule 1 automobile et à une plage de recouvrement sur le plancher 7 arrière et le bord 25 horizontal du bloc 4 arrière, par les extensions 27, 28.

La figure 4 illustre un mode de réalisation de la caisse 2 dans lequel le véhicule 1 automobile est dans une version dite « berline », l'empattement L du véhicule 1 automobile, dans cette version, étant plus grand que l'empattement L du véhicule 1 précédemment décrit en référence à la figure 3.

La disposition des trous 15 avec les perçages 23 est modifiée, de sorte à faire reculer le bloc 4 arrière et faire gagner au véhicule 1 automobile de la longueur, par rapport à la version du véhicule 1 automobile précédemment décrite.

La planche 26 à talon s'adapte à différentes versions du véhicule 1 automobile. Cependant, les extensions 27, 28 doivent s'adapter à chaque version du véhicule 1 automobile. Ainsi, pour cette version « berline » du véhicule 1 automobile, les extensions 27, 28 possèdent une longueur L2, correspondante à la même plage de recouvrement des extensions 27, 28 avec le plancher 7 arrière et le bord 25 horizontal , associée à la version du véhicule 1 automobile précédemment décrite.

Avantageusement, la forme simple de la planche 26 à talon et des extensions 27, 28 permet de réaliser ces pièces en tôles embouties, et permet de faire varier la nuance du matériau utilisé pour les extensions 27, 28, ainsi que son épaisseur E.

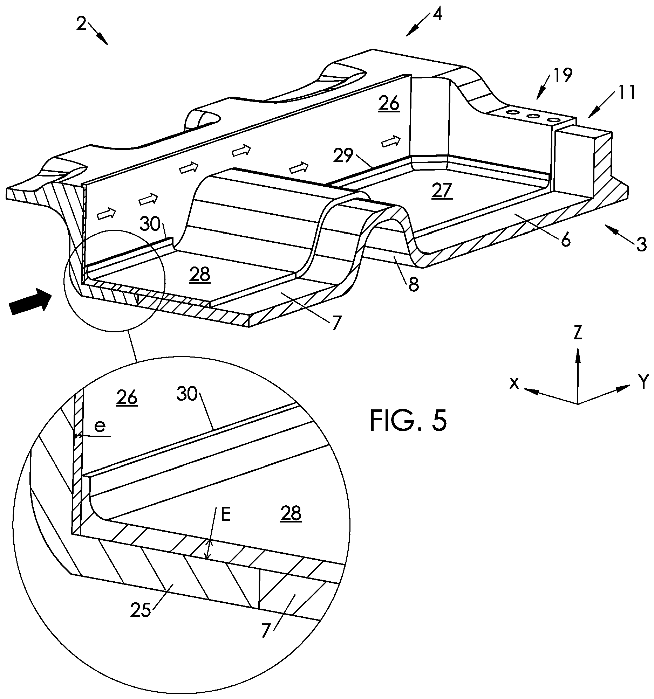

Ainsi, comme illustré sur la figure 5, les extensions 27, 28 peuvent avoir une épaisseur E supérieure à l'épaisseur e de la planche 26 à talon. Le choix de l'épaisseur des extensions 27, 28 et de la nuance du matériau utilisée dépendent de la version du véhicule 1 automobile et de l'aptitude de la caisse 2 à encaisser un choc latéral, au niveau de la jonction entre le bloc 3 avant et le bloc 4 arrière.

De plus, le recouvrement de la planche 26 à talon par les bordures 29, 30 permet d'avoir une double épaisseur au niveau de la planche 26 à talon, au droit du passage des efforts, lors d'un choc latéral survenant sur la caisse 2 (voir la flèche noire sur la figure 5). De cette façon, la transmission des efforts (voir les flèches blanches sur la figure 5), lors d'un choc latéral, est mieux assurée, et l'on peut encore optimiser cette transmission d'efforts en augmentant l'épaisseur E des extensions 27, 28.

Ainsi, si l'on souhaite augmenter la résistance de la caisse 2 face à un choc latéral, on augmentera l'épaisseur E des extensions 27, 28.

La caisse 2 qui vient d'être décrite présente les avantages suivants.

Premièrement, la dissociation de la planche 26 à talon et des extensions 27, 28 permet de réaliser toutes ces pièces facilement, grâce à l'emboutissage, elle permet ainsi d'augmenter la vitesse de production de ces pièces.

Deuxièmement, cette caisse 2 permet l'usage d'une unique planche 26 à talon, pour différentes versions du véhicule 1 automobile.

Troisièmement, cette caisse 2 permet de modifier aisément la nuance de matériau et l'épaisseur E des extensions 27, 28, en fonction de la version du véhicule 1 automobile et de l'objectif de résistance face à un choc latéral de la caisse 2.

## Revendications

1. Caisse (2) de véhicule (1) automobile à empattement L modulable, cette caisse (2) comprenant :
- un bloc (3) avant, comportant un plancher (6) avant prolongé d'un plancher (7) arrière ;
- un bloc (4) arrière, solidaire du bloc (3) avant et comportant une planche (26) à talon, fixée sur un bord (24) vertical du bloc (4) arrière, **caractérisée en ce qu'**elle comprend deux extensions (27, 28), distinctes de la planche (26) à talon, montées sur le plancher (7) arrière et un bord (25) horizontal du bloc (4) arrière, au contact de la planche (26) à talon et comprenant chacune une bordure (29, 30) apte à recouvrir en partie la planche (26) à talon.

2. Caisse (2) selon la revendication 1, **caractérisée en ce que** le bloc (3) avant est séparé en deux par un tunnel (8), s'étendant longitudinalement et de manière centrale le long des planchers (6, 7).

3. Caisse (2) selon la revendication 1, **caractérisée en ce que** les extensions (27, 28) ont une nuance de matériau différente de la planche (26) à talon.

4. Caisse (2) selon l'une quelconque des revendications précédentes, **caractérisée en ce que** les extensions (27, 28) ont une épaisseur E différente de l'épaisseur e de la planche (26) à talon.

5. Caisse (2) selon l'une quelconque des revendications précédentes, **caractérisée en ce que** la largeur L1 des extensions (27, 28) est variable, selon l'empattement L du véhicule (1) automobile.

6. Caisse (2) selon l'une quelconque des revendications précédentes, **caractérisée en ce que** la planche (26) à talon et les extensions (27, 28) sont réalisées par emboutissage.

7. Caisse (2) selon la revendication 1, **caractérisée en ce que** le bloc (3) avant comprend une pluralité de trous (15), creusés dans des parois (11, 12).

8. Caisse (2) selon la revendication 7, **caractérisé en ce que** le bloc (4) arrière comprend une pluralité de perçages (23), creusés dans des excroissances (19, 20)

9. Caisse (2) selon la revendication 8, **caractérisée en ce que** le bloc (3) avant est solidaire du bloc (4) arrière, dans plusieurs positions ajustables, grâce à un moyen de fixation traversant les trous (15) et les perçages (23).

10. Véhicule (1) automobile comprenant la caisse (2) selon l'une quelconque des revendications précédentes.

## Patentansprüche

1. Karosserie (2) eines Kraftfahrzeugs (1) mit einstellbarem Achsstand L, wobei diese Karosserie (2) Folgendes umfasst:
- einen vorderen Block (3), der einen vorderen Boden (6) umfasst, der mit einem hinteren Boden (7) verlängert ist;
- einen hinteren Block (4), der fest mit dem vorderen Block (3) verbunden ist und eine Platte (26) mit Absatz, die auf einem vertikalen Rand des hinteren Blocks (4) befestigt ist, umfasst, **dadurch gekennzeichnet, dass** sie zwei Erweiterungen (27, 28) umfasst, die von der Platte (26) mit Absatz getrennt sind, die auf den hinteren Boden (7) und einen horizontalen Rand (25) des hinteren Blocks (4) in Berührung mit der Platte (26) mit Absatz montiert sind und jeweils eine Umrandung (29, 30) umfassen, die geeignet ist, um die Platte (26) mit Absatz teilweise abzudecken.

2. Karosserie (2) nach Anspruch 1, **dadurch gekennzeichnet, dass** der vordere Block (3) von einem Tunnel (8), der sich längs und zentral entlang der Böden (6, 7) erstreckt, in zwei geteilt ist.

3. Karosserie (2) nach Anspruch 1, **dadurch gekennzeichnet, dass** die Erweiterungen (27, 28) eine Materialsorte aufweisen, die von der Platte (26) mit Absatz unterschiedlich ist.

4. Karosserie (2) nach einem der vorstehenden Ansprüche, **dadurch gekennzeichnet, dass** die Erweiterungen (27, 28) eine Stärke E aufweisen, die von der Stärke e der Platte (26) mit Absatz unterschiedlich ist.

5. Karosserie (2) nach einem der vorstehenden Ansprüche, **dadurch gekennzeichnet, dass** die Breite L1 der Erweiterungen (27, 28) gemäß dem Achsstand L des Kraftfahrzeugs (1) variabel ist.

6. Karosserie (2) nach einem der vorstehenden Ansprüche, **dadurch gekennzeichnet, dass** die Platte (26) mit Absatz und die Erweiterungen (27, 28) durch Stanzen hergestellt sind.

7. Karosserie (2) nach Anspruch 1, **dadurch gekennzeichnet, dass** der vordere Block (3) eine Mehrzahl von Löchern (15), die in Wänden (11, 12) vertieft sind, umfasst.

8. Karosserie (2) nach Anspruch 7, **dadurch gekennzeichnet, dass** der hintere Block (4) eine Mehrzahl von Bohrungen (23) umfasst, die in Ausstülpungen (19, 20) vertieft sind.

9. Karosserie (2) nach Anspruch 8, **dadurch gekennzeichnet, dass** der vordere Block (3) mit dem hinteren Block (4) fest in mehreren einstellbaren Positionen dank eines Befestigungsmittels, das die Löcher (15) und die Bohrungen (23) durchquert, verbunden ist.

10. Kraftfahrzeug (1), das die Karosserie (2) nach einem der vorstehenden Ansprüche umfasst.

## Claims

1. A body shell (2) of a motor vehicle (1) with an adjustable wheelbase L, this body shell (2) including:
- a front unit (3), comprising a front floor (6) extended by a rear floor (7);
- a rear unit (4), secured to the front unit (3) and comprising a heel board (26), fixed to a vertical edge (24) of the rear unit (4), **characterized in that** it includes two extensions (27, 28), distinct from the heel board (26), mounted on the rear floor (7) and a horizontal edge (25) of the rear unit (4), in contact with the heel board (26) and each including a rim (29, 30) able to partially cover the heel board (26).

2. The body shell (2) according to Claim 1, **characterized in that** the front unit (3) is separated into two by a tunnel (8), extending longitudinally and in a central manner along the floors (6, 7).

3. The body shell (2) according to Claim 1, **characterized in that** the extensions (27, 28) have a shade of material different from the heel board (26).

4. The body shell (2) according to any one of the preceding claims, **characterized in that** the extensions (27, 28) have a thickness E different from the thickness e of the heel board (26).

5. The body shell (2) according to any one of the preceding claims, **characterized in that** the width L1 of the extensions (27, 28) is variable, according to the wheelbase L of the motor vehicle (1).

6. The body shell (2) according to any one of the preceding claims, **characterized in that** the heel board (26) and the extensions (27, 28) are realized by stamping.

7. The body shell (2) according to Claim 1, **characterized in that** the front unit (3) includes a plurality of holes (15), hollowed out in walls (11, 12).

8. The body shell (2) according to Claim 7, **characterized in that** the rear unit (4) includes a plurality of bores (23), hollowed out in excrescences (19, 20).

9. The body shell (2) according to Claim 8, **characterized in that** the front unit (3) is integral with the rear unit (4), adjustable in several positions, owing to a fixing means passing through the holes (15) and the bores (23).

10. A motor vehicle (1) including the body shell (2) according to any one of the preceding claims.
